(19) Europäisches Patentamt / European Patent Office / Office européen des brevets

(11) **EP 3 508 059 A1**

(12) **EUROPEAN PATENT APPLICATION**
published in accordance with Art. 153(4) EPC

(43) Date of publication:
**10.07.2019 Bulletin 2019/28**

(51) Int Cl.:
***A01K 61/80*** (2017.01)

(21) Application number: **16915208.9**

(86) International application number:
**PCT/JP2016/075976**

(22) Date of filing: **05.09.2016**

(87) International publication number:
**WO 2018/042651 (08.03.2018 Gazette 2018/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Umitron Pte. Ltd.**
**079903 (SG)**

(72) Inventor: **FUJIWARA, Ken**
**Tokyo 135-0062 (JP)**

(74) Representative: **Betten & Resch**
**Patent- und Rechtsanwälte PartGmbB**
**Maximiliansplatz 14**
**80333 München (DE)**

(54) **FEEDING SYSTEM AND FEEDING METHOD**

(57) An aquaculture system according to the present disclosure includes a feeding apparatus for supplying food to cultivated fish in a fish enclosure, a camera, and an image processing apparatus for analyzing motion of an image indicated by image data acquired by the camera. In the aquaculture system according to the present disclosure, the feeding apparatus is caused to stop supplying food if an amount indicating the motion of the image becomes smaller than or equal to a predetermined amount while the feeding apparatus is supplying food.

FIG.2

**Description**

Technical field

The present invention relates to a feeding system and a feeding method.

Background Art

There are cases where an automated feeding apparatus for automatically supplying food is used to feed cultivated fish in a fish firm. Such an automated feeding apparatus releases food into a fish enclosure in accordance with a preset feeding time and feeding amount. Note that Patent Document 1 describes a technique for capturing an image of aquatic organisms in a water tank to monitor them.

Citation List

Patent Document

Patent Document 1: JP 2003-250382A

Summary of Invention

Technical Problem

Conventionally, the feeding time, the feeding amount, and the like are set on the automated feeding apparatus based on a visual check made by or the experience of a person. For this reason, adjustment of the feeding time and the feeding amount is laborious, or feeding is not performed appropriately, resulting in extra labor and feeding costs. Also, since the eating behavior of cultivated fish changes due to factors such as water temperature, it is difficult to set an appropriate feeding time and feeding amount on the automated feeding apparatus. If the feeding amount is excessive, the feeding costs add up, and there is also a concern that the environment in the fish enclosure will be polluted.

It is an object of the present invention to realize appropriate feeding by controlling feeding in accordance with the eating behavior of cultivated fish.

Solution to Problem

A main invention for achieving the above-stated object is a feeding system including: a feeding apparatus for supplying food to cultivated fish in a fish enclosure; a camera; and an image processing apparatus for analyzing motion of an image indicated by image data acquired by the camera. If an amount indicating the motion of the image has become smaller than or equal to a predetermined amount while the feeding apparatus is supplying food, the feeding apparatus is caused to stop supplying food.

Other features of the present invention will be made apparent through the following specification and drawings.

Advantageous Effect of the Invention

According to the present invention, appropriate feeding can be realized by controlling feeding in accordance with the eating behavior of cultivated fish.

Brief Description of Drawings

FIG. 1 is an overall configuration diagram of a feeding system 10 according to an embodiment.
FIG. 2 is a flowchart of image processing performed by an image processing apparatus 35.
FIG. 3 is an illustrative diagram of a movement vector computed using optical flow.
FIG. 4A shows an example of an image indicated by a frame (image data) included in moving image data.
FIG. 4B is an illustrative diagram in which movement amounts at respective pixels computed using optical flow are visualized.
FIGS. 5A and 5B are graphs that indicate relationships between the action amount and the feeding state of an automated feeding apparatus 20.

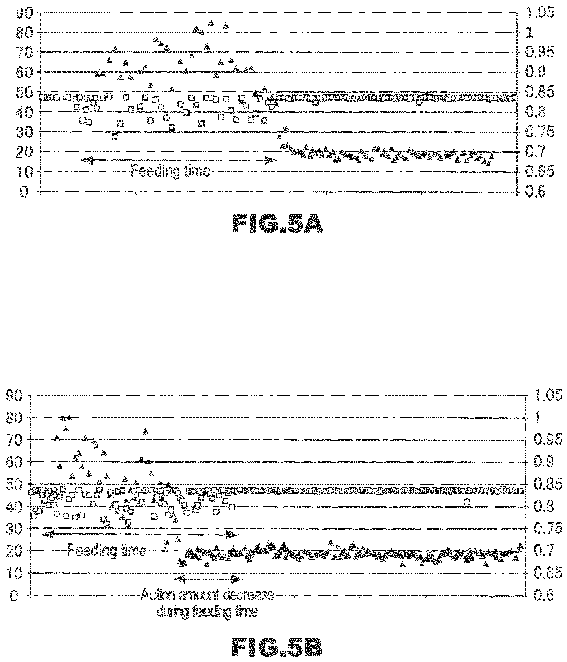

FIGS. 5A and 5B are graphs that indicate relationships between the action amount and the feeding state of the automated feeding apparatus 20.

## Description of Embodiments

At least the following content will be apparent from the following specification and the drawings.

A feeding system will be apparent that includes a feeding apparatus for supplying food to cultivated fish in a fish enclosure; a camera; and an image processing apparatus for analyzing motion of an image indicated by image data acquired by the camera, wherein, if an amount indicating the motion of the image has become smaller than or equal to a predetermined amount while the feeding apparatus is supplying food, the feeding apparatus is caused to stop supplying food. According to this feeding system, appropriate feeding can be realized by controlling feeding in accordance with the eating behavior of cultivated fish.

It is desirable that the image processing apparatus computes the amount indicating the motion of the image based on optical flow. With this configuration, appropriate feeding can be realized by controlling feeding in accordance with the eating behavior of cultivated fish.

It is desirable that the image processing apparatus computes the amount indicating the motion of the image, using dense optical flow, based on a movement amount of each pixel in the image. With this configuration, feeding can be controlled in accordance with the eating behavior of a school of fish.

It is desirable that the image processing apparatus computes a sum of movement amounts of respective pixels as the amount indicating the motion of the image, using dense optical flow. Otherwise, it is desirable that the image processing apparatus computes a Frobenius norm of a matrix composed of movement vectors of respective pixels as the amount indicating the motion of the image, using dense optical flow. With this configuration, feeding can be controlled in accordance with the eating behavior of the school of fish.

A feeding system in which the camera acquires the image data obtained by capturing an image of the cultivated fish in the fish enclosure.

It is desirable that the camera is installed in water in the fish enclosure such that a passage through which food released from a feeding opening in the feeding apparatus falls in the water is included in an angle of view. With this configuration, an image of fish shadows of cultivated fish that are eating can be readily captured.

It is desirable that the camera acquires the image data obtained by capturing an image of a water surface of the fish enclosure. With this configuration, the camera does not need to be installed in the water.

A feeding system will be apparent that includes a camera installed to a fish enclosure to which a feeding apparatus is installed; and an image processing apparatus for analyzing motion of an image indicated by image data acquired by the camera, wherein, if an amount indicating the motion of the image has become smaller than or equal to a predetermined amount while the feeding apparatus is supplying food, the feeding apparatus is caused to stop supplying food. According to this feeding system, appropriate feeding can be realized by controlling feeding in accordance with the eating behavior of cultivated fish.

A feeding system will be apparent that includes a feeding step of supplying food to cultivated fish in a fish enclosure, by a feeding apparatus; an image data acquisition step of acquiring image data using a camera installed to the fish enclosure; an image processing step of analyzing motion of an image indicated by the image data; and a stopping step of causing the feeding apparatus to stop supplying food if an amount indicating the motion of the image has become smaller than or equal to a predetermined amount while the feeding apparatus is supplying food. According to this feeding system, appropriate feeding can be realized by controlling feeding in accordance with the eating behavior of cultivated fish.

## First Embodiment

### Overall Configuration

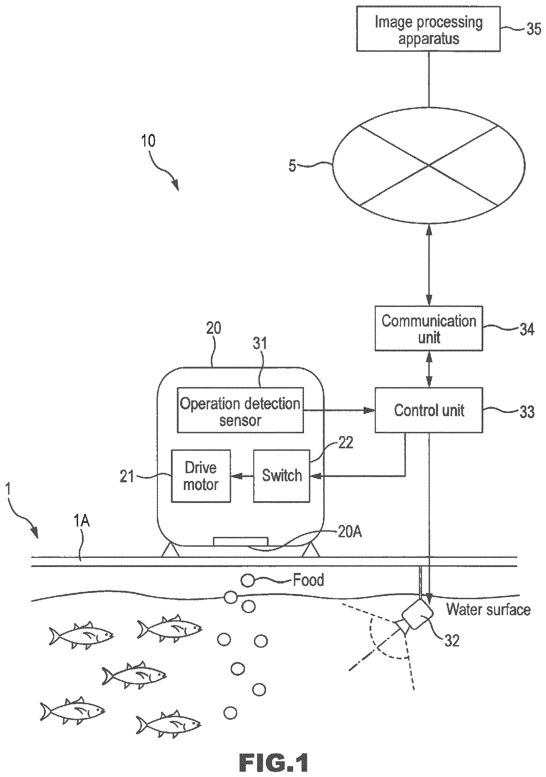

FIG. 1 is an overall configuration diagram of a feeding system 10 according to the first embodiment.

The feeding system 10 according to this embodiment is an apparatus for feeding cultivated fish in a fish enclosure 1. The feeding system 10 includes an automated feeding apparatus 20, an operation detection sensor 31, a camera 32, a control unit 33, a communication apparatus 34, and an image processing apparatus 35. Note that the feeding system 10 can also be constructed by additionally providing the operation detection sensor 31, the camera 32, and so on, to an existing automated feeding apparatus 20 that is already installed to the fish enclosure 1.

The automated feeding apparatus 20 is an apparatus for automatically introducing food into the fish enclosure 1. The automated feeding apparatus 20 is installed on a body structure 1A of the fish enclosure 1. The automated feeding apparatus 20 has a tank (not shown) for storing food, a feeding opening 20A for introducing food into the fish enclosure 1, a drive motor 21, and a switch 22. As a result of the switch 22 being turned on and off, driving of the drive motor 21 is turned on and off to release food from the feeding opening 20A and stop releasing the food. The switch 22 is turned on and off in accordance with instructions from the control unit 33. That is to say, the feeding operation performed by the automated feeding apparatus 20 is controlled in accordance with instructions from the control unit 33.

In this embodiment, the automated feeding apparatus 20 releases food into the fish enclosure 1 in accordance with a preset feeding time and feeding amount. However, if the automated feeding apparatus 20 receives a stop instruction from the control unit 33 while supplying food, the automated feeding apparatus 20 stops the feeding operation even if the set feeding time or feeding amount has not been reached.

The operation detection sensor 31 is a sensor for detecting an operation of the automated feeding apparatus 20. The operation detection sensor 31 detects whether the automated feeding apparatus 20 is supplying food or not (i.e. has stopped supplying food). In this embodiment, the operation detection sensor 31 detects an operation of the automated feeding apparatus 20 by measuring a current flowing through the drive motor 21 in the automated feeding apparatus 20, utilizing the fact that the current value of the drive motor 21 increases while the automated feeding apparatus 20 is supplying food. Note that the operation detection sensor 31 may alternatively detect an operation of the automated feeding apparatus 20 by measuring a current of a battery (not shown) in the automated feeding apparatus 20, rather than the current value of the drive motor 21. Also, the operation detection sensor 31 may detect an operation of the automated feeding apparatus 20 using a method other than current measurement.

The camera 32 is an image capture apparatus for capturing an image of the cultivated fish that are eating in the fish enclosure 1. The camera 32 acquires at least two continuous frames (still images) for later-described optical flow computation. Here, the camera 32 captures a moving image that is constituted by a large number of frames. In this embodiment, the camera 32 captures a moving image at 15 frames per second, for example.

In this embodiment, the camera 32 is installed in the water and captures an image of fish shadows of the cultivated fish in the fish enclosure 1. A wide-angle camera is used such that fish shadows of the cultivated fish in the fish enclosure 1 can be readily included in the image capture area. Also, the camera 32 is installed near the water surface such that the area from the water surface to the water-bottom surface can be included in the angle of view. Furthermore, to make it easy to capture an image of fish shadows of the cultivated fish that are eating, the camera 32 is installed in the water such that a passage through which food released into the water from the feeding opening 20A of the automated feeding apparatus 20 falls is included in the angle of view of the camera 32. However, the camera 32 may alternatively be installed above the water, and does not need to directly capture an image of the cultivated fish, as will be described later.

The control unit 33 is a controller for controlling various apparatuses (the automated feeding apparatus 20, the operation detection sensor 31, the camera 32, the communication apparatus 34, etc.) that are installed to the fish enclosure 1. For example, the control unit 33 controls the feeding operation performed by the automated feeding apparatus 20 by controlling the switch 22 of the automated feeding apparatus 20 to turn on and off. The control unit 33 also acquires the results of detection performed by the operation detection sensor 31 at regular timings (e.g. every minute), and detects the feeding state of the automated feeding apparatus 20. Note that the detection timings of the operation detection sensor 31 do not need to be regular, and the operation detection sensor 31 may alternatively detect the feeding state of the automated feeding apparatus 20 in accordance with an instruction from the image processing apparatus 35. The control unit 33 also controls image capturing performed by the camera 32, and acquires image data from the camera 32. The control unit 33 also controls transmission and reception of data performed by the communication apparatus 34. For example, the control unit 33 transmits data regarding the results of detection performed by the operation detection sensor 31 (i.e. the feeding state of the automated feeding apparatus 20) to the image processing apparatus 35, transmits image data acquired by the camera 32 to the image processing apparatus 35, and receives instruction data from the image processing apparatus 35 via the communication apparatus 34.

Note that the control unit 33 may also have later-described functions of the image processing apparatus 35. In this case, the feeding system 10 does not need to include the communication apparatus 34, and does not need to be connected to a communication network 5.

The communication apparatus 34 is an apparatus for connecting to the communication network 5. The communication apparatus 34 and the image processing apparatus 35 are communicably connected to each other via the communication network 5. The communication apparatus 34 transmits data, such as image data and the results of detection performed by the operation detection sensor 31, to the image processing apparatus 35, and receives instruction data (e.g. a control instruction to be given to the automated feeding apparatus 20) from the image processing apparatus 35, in accordance with instructions from the control unit 33. Note that the communication network 5 is, for example, the Internet, a telephone network, a wireless communication network, a LAN, a VAN, or the like. Here, the Internet is assumed as the communication network 5.

The image processing apparatus 35 is an apparatus for analyzing image data acquired by the camera 32. The image processing apparatus 35 also functions, together with the control unit 33, as a controller for controlling the automated feeding apparatus 20, and so on, that are installed to the fish enclosure 1, as will be described later. The image processing apparatus 35 is a computer such as a personal computer or a workstation, for example, and includes a CPU, a memory, a storage device, a communication unit, and so on, which are not shown in the diagram. The image processing apparatus 35 is constituted by one or more computers. The image processing apparatus 35 may also be a server provided by a server rental company, for example.

The image processing apparatus 35 receives, from the communication apparatus 34, the results of detection performed by the operation detection sensor 31, moving image data acquired by the camera 32, and the like, via the communication network 5. The image processing apparatus 35 also transmits an instruction to control the feeding operation of the automated feeding apparatus 20 via the communication network 5.

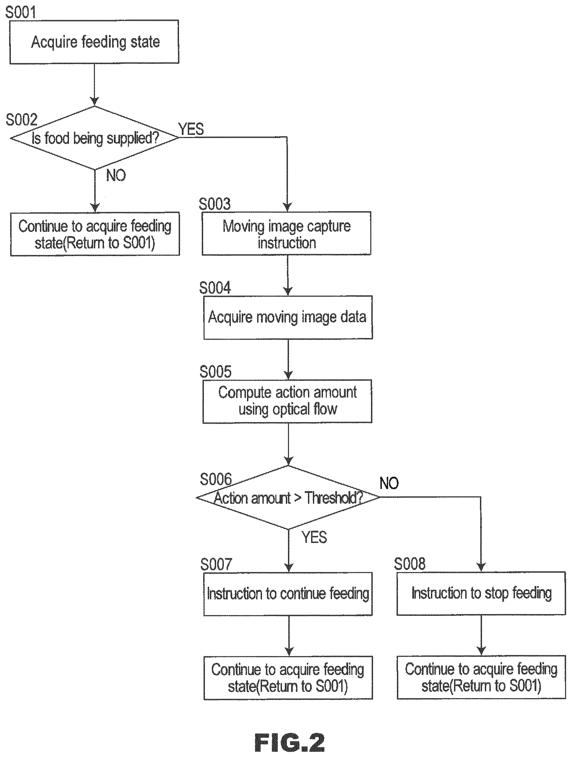

FIG. 2 is a flowchart of image processing performed by the image processing apparatus 35. An image processing program is installed, in advance, in the computer that constitutes the image processing apparatus 35, and the image processing program causes the computer to execute each process shown in the diagram.

First, the image processing apparatus 35 acquires the feeding state of the automated feeding apparatus 20 (S001). Note that, in this embodiment, the automated feeding apparatus 20 performs the feeding operation in accordance with a preset feeding time and feeding amount (e.g. performs the feeding operation for 90 minutes starting from 5 o'clock in the afternoon every two days). The control unit 33 also acquires the results of detection performed by the operation detection sensor 31 at regular timings (e.g. every minute), and the image processing apparatus 35 acquires the feeding state of the automated feeding apparatus 20 at regular timings. However, the image processing apparatus 35 may alternatively acquire the feeding state of the automated feeding apparatus 20 by instructing the control unit 33 to transmit the results of detection performed by the operation detection sensor 31.

Next, the image processing apparatus 35 judges whether or not food is being supplied (i.e. whether or not the automated feeding apparatus 20 is supplying food) (S002). If food is not being supplied (NO in S002), the image processing apparatus 35 returns to S001 and continues to acquire the feeding state.

If the image processing apparatus 35 judges that food is being supplied (YES in S002), the image processing apparatus 35 transmits a moving image capture instruction to the control unit 33 to capture a moving image with the camera 32 (S003). The control unit 33 that has received the moving image capture instruction from the image processing apparatus 35 causes the camera 32 to capture a moving image to generate moving image data, and transmits the moving image data to the image processing apparatus 35. Thus, the image processing apparatus 35 acquires moving image data transmitted from the control unit 33 (S004). Note that, in this embodiment, the image processing apparatus 35 causes the camera 32 to capture an approximately 10-second moving image to acquire the moving image data. Note that the image processing apparatus 35 discards several seconds worth of frames (image data) from the start of image capturing, and extracts frames after several seconds from the start of image capturing. This is because settings of the camera 32 (e.g. automatic exposure setting, automatic focus setting, etc.) are automatically configured immediately after image capturing is started, which makes the image indicated by frames captured immediately after image capturing is started unstable.

Next, the image processing apparatus 35 analyzes frames (image data) contained in the moving image data, and analyzes motion of an image of fish shadows indicated by the frames. Here, the image processing apparatus 35 quantitatively computes the action amount of the fish shadows in the moving image data, using optical flow (S005).

Optical flow algorithms include a sparse algorithm and a dense algorithm, for example. In sparse optical flow, a feature point in an image is extracted, and the movement amount of the feature point is computed (estimated). Meanwhile, in dense optical flow, the movement amount of each of the pixels that constitute an image is computed.

In this embodiment, the image processing apparatus 35 computes the action amount of the image of the fish shadows, based on a dense optical flow algorithm. The first reason for employing dense optical flow is because, when a school of fish (a large number of cultivated fish) is captured in an image, dense optical flow is suitable for quantitative evaluation of the eating behavior of the entire school of fish. The second reason for employing dense optical flow is because, in a special environment in which an image of the cultivated fish in the fish enclosure 1 is captured, a state occurs in which a large number of fish with the same shape appears in the image, and it is thus difficult to extract a feature point in sparse optical flow.

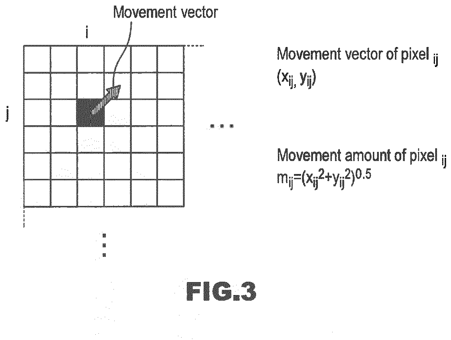

FIG. 3 is an illustrative diagram of a movement vector computed using optical flow. Although only the movement vector of a pixel at the coordinates (i, j) is shown here, the movement vector of each two-dimensionally arranged pixel is computed in dense optical flow.

In this embodiment, the image processing apparatus 35 computes the movement vector of each pixel using optical flow, also computes the sum of absolute magnitudes (movement amounts) of the movement vectors of the respective pixels, and computes the resulting value as the action amount of the fish shadows in the moving image data. For example, in a case where the movement vector at the coordinates (i, j) is $(x_{ij}, y_{ij})$, the movement amount of this pixel (the absolute magnitude of the movement vector) $m_{ij}$ is as expressed by the following equation.

$$m_{ij} = (x_{ij}^2 + y_{ij}^2)^{0.5}$$

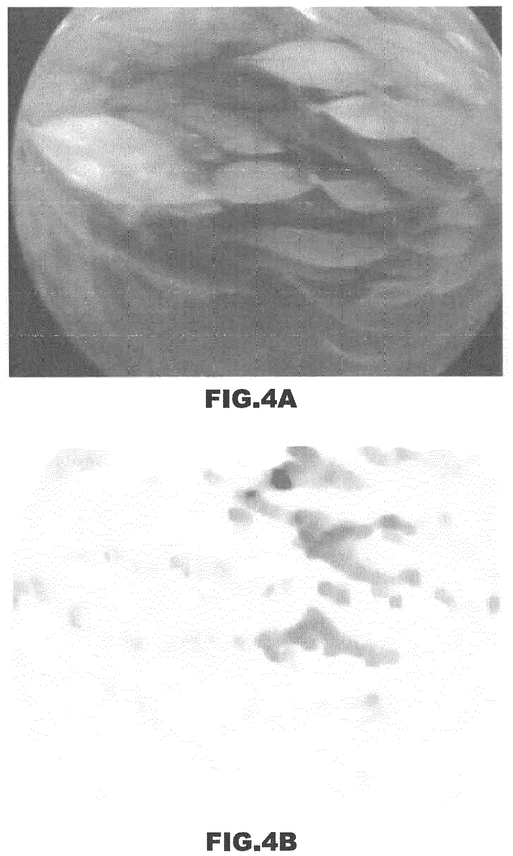

FIG. 4A shows an example of an image indicated by a frame (image data) included in the moving image data.

A large number of cultivated fish (school of fish) is thus captured in the image. However, many cultivated fish in the image are moving in various manners.

FIG. 4B is an illustrative diagram in which the movement amount of each pixel calculated using optical flow is visualized. Here, the movement amount of each pixel is visualized such that a pixel with a greater movement amount is indicated with a deeper tone value. If the movement vector of each pixel is computed using optical flow, and the absolute magnitude (movement amount) of the movement vector of each pixel is also computed, the moving state of the entire school of fish can be understood even if many fish in the image are moving in various manners. That is to say, if the sum of the movement amounts of the respective pixels (the absolute magnitudes of the movement vectors) is computed as the action amount as in this embodiment, the value of the action amount increases if the school of fish is moving actively, and the value of action amount decreases if the school of fish is moving less actively. For this reason, the motion of the image of the fish shadows indicated by the image data can be evaluated quantitatively based on the computed value of the action amount.

Although, in this embodiment, the sum of the movement amounts (the absolute magnitudes of the movement vectors) of the respective pixels is computed as the action amount, the action amount that indicates the motion of the image is not limited thereto. For example, the image processing apparatus 35 may compute the Frobenius norm of a matrix M (=$[m_{ij}]$) that is composed by arranging the movement amounts $m_{ij}$ of the respective pixels, and use the resulting value as the action amount of the image of the fish shadows. Here, the Frobenius norm of the matrix M is a root sum square of all components that composes the matrix M. In this case as well, the value of the action amount increases if the school of fish is moving actively, and the value of the action amount decreases if the school of fish is moving less actively. For this reason, the motion of the image of the fish shadows indicated by the image data can be evaluated quantitatively based on the computed value of the action amount.

A configuration may also be employed in which the movement amounts (the absolute magnitudes of the movement vectors) of the respective pixels are computed using optical flow, and the largest value among the movement amounts is used as the action amount that indicates the motion of the image. It is thus possible to assume the pixel whose movement amount takes the largest value as a feature point of the image, and quantitatively evaluate the motion of the image of fish shadows based on the movement amount of the feature points.

Next, the image processing apparatus 35 compares the action amount computed in step S005 with a threshold indicating a predetermined amount (S006). If the action amount exceeds the threshold (YES in S006), the image processing apparatus 35 transmits, to the control unit 33, an instruction to cause the automated feeding apparatus 20 to continue the feeding operation (S007). This is because, the school of fish is moving actively when the action amount exceeds the threshold, and it is therefore presumed that the cultivated fish are eating.

On the other hand, if the action amount computed in step S005 has become smaller than or equal to the threshold (NO in S006), the image processing apparatus 35 transmits, to the control unit 35, an instruction to cause the automated feeding apparatus 20 to stop the feeding operation (S008). This is because the school of fish is moving less actively when the action amount is smaller than or equal to the threshold, and it is therefore presumed that the cultivated fish are no longer eating. The control unit 33 that has received the stop instruction from the image processing apparatus 35 turns off the switch 22 of the automated feeding apparatus 20, and the automated feeding apparatus 20 can thus stop the feeding operation before the preset feeding time and feeding amount are reached.

FIGS. 5A and 5B are graphs that indicate relationships between the action amount and the feeding state of the automated feeding apparatus 20. The horizontal axis of the graphs indicates time. The left vertical axis of the graphs indicates the action amount computed in step S005. The right vertical axis of the graphs indicates the current value of the automated feeding apparatus 20 (i.e. the result of detection performed by the operation detection sensor 31). Black triangular points in the graphs indicate values of the action amount. White rectangular points in the graphs indicate current values of the automated feeding apparatus 20. Here, to describe the relationships between the action amount and the feeding state, the automated feeding apparatus 20 performs the feeding operation for a preset feeding time (e.g. 90 minutes) regardless of whether or not the action amount becomes smaller than or equal to the threshold.

As shown in FIG. 5A, while the automated feeding apparatus 20 is supplying food, the cultivated fish eat, and therefore, the fish school moves more actively, resulting in an increase in the values of the action amount (black triangles). Also, after the automated feeding apparatus 20 has finished the feeding operation by the preset feeding amount (e.g. 90-minute feeding time), the cultivated fish no longer eat, resulting in a decrease in the values of the action amount, as shown in FIG. 5A.

There are cases where, after the automated feeding apparatus 20 has started the feeding operation and the values of the action amount (black triangles) have temporarily increased, the values of the action amount decreases even while food is being supplied, as shown in FIG. 5B. If food continues to be released from the automated feeding apparatus 20 in this situation, the feeding cost increases, and there is also a concern that the environment in the fish enclosure 1 will be polluted by the left-over food. In this regard, in this embodiment, the feeding operation of the automated feeding apparatus 20 is stopped (S008) if the action amount becomes smaller than or equal to the threshold, making it possible to suppress the case where excessive food is released to the fish enclosure 1.

Second Embodiment

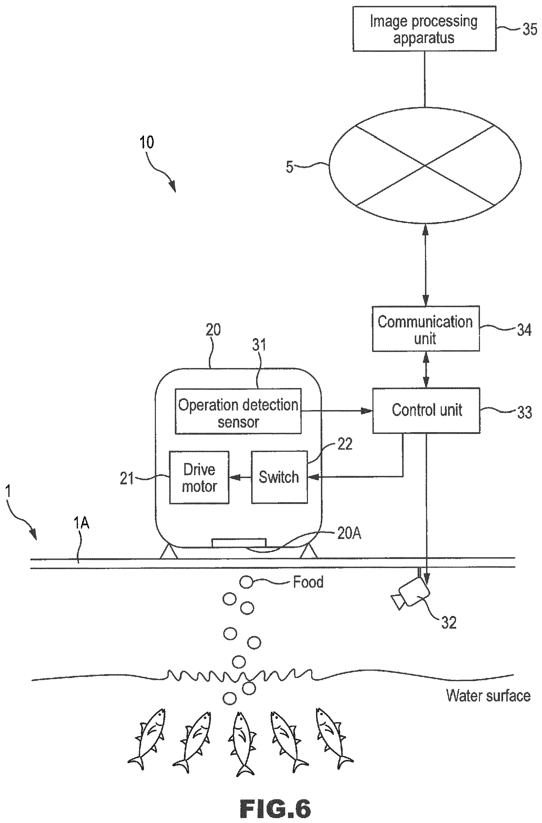

FIG. 6 is an overall configuration diagram of a feeding system 10 according to the second embodiment. In the above-described first embodiment, the camera 32 is installed in the water and captures an image of the fish shadows of the cultivated fish in the fish enclosure 1. In the second embodiment, the camera 32 is installed above the water surface. Also, in the second embodiment, the camera 32 does not capture an image of the cultivated fish in the water, but captures an image of the water surface onto which food is released (i.e. the water surface opposing an insertion opening). The second embodiment is advantageous in that the camera 32 does not need to be installed in the water.

In the second embodiment as well, similarly to the above-described first embodiment, the image processing apparatus 35 analyzes moving image data acquired by the camera 32, computes a movement vector of each pixel using dense optical flow, computes the sum of the absolute magnitudes (movement amounts) of the movement vectors of the respective pixels, and computes the resulting value as the action amount.

If the cultivated fish eat while the automated feeding apparatus 20 is supplying food, a water splash occurs on the water surface, which increases the value of the action amount computed based on image data. On the other hand, if the cultivated fish no longer eat, the water surface becomes calm, and thus the value of the action amount computed based on image data decreases.

In the second embodiment as well, similarly to the above-described first embodiment, the action amount computed in step S005 is compared with a threshold indicating a predetermined amount (S006). If the action amount exceeds the threshold (YES in S006), the image processing apparatus 35 transmits, to the control unit 33, an instruction to cause the automated feeding apparatus 20 to continue the feeding operation (S007). On the other hand, if the action amount computed in step S005 has become smaller than or equal to the threshold (NO in S006), the image processing apparatus 35 transmits, to the control unit 35, an instruction to cause the automated feeding apparatus 20 to stop the feeding operation (S008). Thus, the automated feeding apparatus 20 can stop the feeding operation before the preset feeding time and feeding amount are reached, making it possible to suppress the case where excessive food is released into the fish enclosure 1.

Others

The above embodiments are intended to facilitate understanding of the present invention, and are not intended to have the present invention interpreted in a limiting manner. The present invention may be modified and altered without departing from the gist thereof, and it is needless to say that the present invention embraces equivalents thereof.

List of Reference Numerals

| | | | |
|---|---|---|---|
| 1 | Fish enclosure, | 1A | Body structure |
| 5 | Communication network | | |
| 10 | Feeding system | | |
| 20 | Automated feeding apparatus, | 20A | Feeding opening |
| 21 | Drive motor, | 22 | Switch |
| 31 | Operation detection sensor, | 32 | Camera |
| 33 | Control unit, | 34 | Communication apparatus |
| 35 | Image processing apparatus | | |

**Claims**

1. A feeding system comprising:

   a feeding apparatus for supplying food to cultivated fish in a fish enclosure;
   a camera; and
   an image processing apparatus for analyzing motion of an image indicated by image data acquired by the camera, wherein, if an amount indicating the motion of the image has become smaller than or equal to a predetermined amount while the feeding apparatus is supplying food, the feeding apparatus is caused to stop supplying food.

2. The feeding system according to claim 1, wherein the image processing apparatus computes the amount indicating the motion of the image based on optical flow.

**3.** The feeding system according to claim 2,
wherein the image processing apparatus computes the amount indicating the motion of the image, using dense optical flow, based on a movement amount of each pixel in the image.

**4.** The feeding system according to claim 3,
wherein the image processing apparatus computes a sum of movement amounts of respective pixels as the amount indicating the motion of the image, using dense optical flow.

**5.** The feeding system according to claim 3,
wherein the image processing apparatus computes a Frobenius norm of a matrix composed of movement vectors of respective pixels as the amount indicating the motion of the image, using dense optical flow.

**6.** The feeding system according to any one of claims 1 to 5,
wherein the camera acquires the image data obtained by capturing an image of the cultivated fish in the fish enclosure.

**7.** The feeding system according to claim 6,
wherein the camera is installed in water in the fish enclosure such that a passage through which food released from a feeding opening in the feeding apparatus falls in the water is included in an angle of view.

**8.** The feeding system according to any one of claims 1 to 5,
wherein the camera acquires the image data obtained by capturing an image of a water surface of the fish enclosure.

**9.** A feeding system comprising:

a camera installed to a fish enclosure to which a feeding apparatus is installed; and
an image processing apparatus for analyzing motion of an image indicated by image data acquired by the camera,
wherein, if an amount indicating the motion of the image has become smaller than or equal to a predetermined amount while the feeding apparatus is supplying food, the feeding apparatus is caused to stop supplying food.

**10.** A feeding method comprising:

a feeding step of supplying food to cultivated fish in a fish enclosure, by a feeding apparatus;
an image data acquisition step of acquiring image data using a camera installed to the fish enclosure;
an image processing step of analyzing motion of an image indicated by the image data; and
a stopping step of causing the feeding apparatus to stop supplying food if an amount indicating the motion of the image has become smaller than or equal to a predetermined amount while the feeding apparatus is supplying food.

**FIG.1**

S001

```
Acquire feeding state
```

S002

Is food being supplied? — YES

NO

```
Continue to acquire feeding
state(Return to S001)
```

S003

```
Moving image capture
instruction
```

S004

```
Acquire moving image data
```

S005

```
Compute action amount
using optical flow
```

S006

Action amount > Threshold? — NO

YES

S007

```
Instruction to continue feeding
```

S008

```
Instruction to stop feeding
```

```
Continue to acquire feeding
state(Return to S001)
```

```
Continue to acquire feeding
state(Return to S001)
```

# FIG.2

Movement vector

i

Movement vector of pixel $_{ij}$
$(x_{ij}, y_{ij})$

j

. . .

Movement amount of pixel $_{ij}$
$m_{ij} = (x_{ij}^2 + y_{ij}^2)^{0.5}$

**FIG.3**

**FIG.4A**

**FIG.4B**

**FIG.5A**

**FIG.5B**

**FIG.6**

## INTERNATIONAL SEARCH REPORT

| International application No. |
| --- |
| PCT/JP2016/075976 |

| A. CLASSIFICATION OF SUBJECT MATTER |
| --- |
| *A01K61/02* (2006.01) i |

According to International Patent Classification (IPC) or to both national classification and IPC

| B. FIELDS SEARCHED |
| --- |

Minimum documentation searched (classification system followed by classification symbols)
A01K61/02

Documentation searched other than minimum documentation to the extent that such documents are included in the fields searched

| Jitsuyo Shinan Koho | 1922–1996 | Jitsuyo Shinan Toroku Koho | 1996–2016 |
| Kokai Jitsuyo Shinan Koho | 1971–2016 | Toroku Jitsuyo Shinan Koho | 1994–2016 |

Electronic data base consulted during the international search (name of data base and, where practicable, search terms used)

| C. DOCUMENTS CONSIDERED TO BE RELEVANT |
| --- |

| Category* | Citation of document, with indication, where appropriate, of the relevant passages | Relevant to claim No. |
| --- | --- | --- |
| X<br>Y | JP 9-262040 A (Hitachi, Ltd.),<br>07 October 1997 (07.10.1997),<br>claims; paragraphs [0007], [0011], [0013]; fig. 1<br>& US 5732655 A<br>column 4, lines 27 to 34; fig. 1<br>& NO 971135 A0 | 1,9,10<br>2-8 |
| X<br>Y | JP 2000-201568 A (Hitachi, Ltd.),<br>25 July 2000 (25.07.2000),<br>claims; paragraphs [0017] to [0020], [0037]; fig. 1<br>(Family: none) | 1,9,10<br>2-8 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>24 November 2016 (24.11.16) | Date of mailing of the international search report<br>06 December 2016 (06.12.16) |
| --- | --- |
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

**INTERNATIONAL SEARCH REPORT**

International application No.

PCT/JP2016/075976

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2010-193768 A  (The Tokyo Electric Power Co., Inc.), 09 September 2010 (09.09.2010), claims (Family: none) | 2-8 |
| Y | JP 2010-88338 A  (The Tokyo Electric Power Co., Inc.), 22 April 2010 (22.04.2010), claims (Family: none) | 2-8 |
| A | JP 11-289906 A  (Hitachi, Ltd.), 26 October 1999 (26.10.1999), (Family: none) | 1-10 |
| A | JP 2005-229835 A  (Sanyo Electric Co., Ltd.), 02 September 2005 (02.09.2005), (Family: none) | 1-10 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003250382 A